# EUROPEAN PATENT APPLICATION

(11) **EP 4 538 205 A1**
(43) Date of publication of application: **16.04.2025**
(21) Application number: 24205337.9
(22) Date of filing: 08.10.2024
(51) Int. Cl.: B65G 17/38, B65G 17/40

(54) **MODULAR CONVEYOR BELT MODULE**

(30) Priority: 11.10.2023 DK PA202370525
(71) Applicant: Ammeraal Beltech Modular A/S, 7100 Vejle (DK)
(72) Inventor: WESTERGAARD ANDERSEN, Kenneth, 7100 Vejle (DK); BUTER, Germ, 1811 KG Alkmaar (NL); FYNBO, Anders, 6200 Aabenraa (DK); OLSEN, Maja Michele, 7100 Vejle (DK); SØRENSEN, Jan, 7120 Vejle Øst (DK); AGERHOLM, Stefan, 7600 Struer (DK); PEDERSEN, Mads, 8766 Nørre Snede (DK)
(74) Representative: Patrade A/S

(57) **Abstract**

Modular conveyor belt module (1) incorporating balls or rollers (28) in the belt module (1), where said module (1) is adapted for installation in a modular conveyor belt, the module (1) comprising an upper cover (10) and a lower main module part (20) where the upper cover (10) is adapted to be arranged above and fitted onto the main module part (20), where a first plurality of eye parts (12, 22) are arranged both on the main module part (20) and on the upper cover (10), such that when the upper cover (10) is positioned on the main module part (20) eye parts will be arranged evenly spaced along the modular conveyor modules width direction, and where one or more cavities (26) is/are arranged in the main module part, and one or more apertures (16) is/are provided in the upper cover (10) such that a ball, roller (20) may be placed in the cavity between the main module part (20) and the upper cover (10) and at least a part of said roller (26), ball projects above the upper cover through the one or more apertures (16).

## Description

### Field of the Invention

The present invention is directed to a modular conveyor belt module as defined in the preamble of independent claims 1. Further, the invention is also directed to an endless modular conveyor belt assembled from a plurality of modular conveyor belt modules.

### Background of the Invention

In the art there are numerous examples of modular conveyor belt modules incorporating rollers or balls. These rollers or balls are provided for different purposes but may be provided in order to allow objects being transported on the conveyor to be held against a stop while the endless conveyor belt still travels underneath the object to be transported. Furthermore, also in some applications it is interesting to be able to move the objects being transported on the endless conveyor in an oblique or lateral direction with respect to the transport direction of the conveyor belt in order to direct the objects to be transported to various positions of the conveyor belt, for example during a sorting process of sorting puzzles in a packing handling centre or the like.

The modular conveyor belt modules may be fastened in various designs in order to accommodate the rollers or the balls, but common for the most prior art the devices is the fact that a cavity is provided in the modular belt module which cavity accommodate the roller or the ball. In examples where rollers are accommodated, these rollers are typically provided with an axle and therefore the circumference of the aperture is provided with means for accommodating the axles such that the roller may rotate freely inside the cavity. For modular belt modules incorporating balls a sphere-shaped cavity is typically provided such that the ball may be supported on a large part of the balls surface and is retained in the cavity by for example a cover or the like.

The present invention is directed to an improved construction for such a conveyor belt module where it is desirable to provide a construction which may be easily assembled and disassembled in order to place or replace rollers and balls and at the same time provides a very sturdy and rigid construction. Furthermore, in some applications it is desirable to be able to replace the rollers or balls for example with rollers or balls made from a harder or softer material or where the module itself needs to be made from a strong material in order to be able to carry and transfer large loads over long distances.

### Description of the Invention

The invention addresses this by providing a modular conveyor belt module module incorporating balls or rollers in the belt module, where said module is adapted for installation in a modular conveyor belt, where the conveyor belt is of the type assembled from a plurality of substantially identical modular belt links where one or more modular belt links forms lateral rows, where each modular belt link has a main body extending in the modular belt link's width direction, and where a plurality of eye parts extend forwards and rearwards from said main body, said eye parts being spaced in the width direction of the modular belt link creating an opening between adjacent eye parts, such that when two modular conveyor belt links are pushed together, the eye parts on one link will inter-fit between eye parts on the other modular belt link, and where lateral apertures in all eye parts are provided, such that when the eye parts of modular belt links in one row are overlapping eye parts in an adjacent row a through-going aperture is formed from side to side of the conveyor belt, and by inserting a connection pin through said lateral through-going aperture, adjacent modular belt links will be hingely connected, characterized in that the belt module comprises an upper cover and a lower main module part where the upper cover is adapted to be arranged above and fitted onto the main module part, where a first plurality of eye parts are arranged both on the main module part and on the upper cover, such that when the upper cover is positioned on the main module part eye parts will be arranged evenly spaced along the modular conveyor modules width direction, and where one or more cavities is/are arranged in the main module part, and one or more apertures is/are provided in the upper cover such that a ball, roller or other item may be placed in the cavity between the main module part and the upper cover and at least a part of said roller, ball or other item projects above the upper cover through the one or more apertures.

Particularly the fact that the two-part construction is comprises a modular main part and an upper cover part assembled around the rollers and balls provides a number of advantages as will be evident from the further embodiment explained below. Also the fact that both the upper cover and the main module part is provided with eye parts provides the advantage that when the upper cover is correctly positioned on the main module part, the eye parts along the forward edge and the rearward edge in the intended travelling direction will be evenly spaced such that the modular conveyor belt module may be interleaved with the eye parts of the adjacent belt modules whereafter a connection pin may be inserted through apertures in the eye parts thereby assembling both the modular conveyor belt modules and the upper cover with the main module part.

In a further advantageous embodiment of the invention the modular conveyor belt module is between a least some of the eye parts in the width direction on both sides of the main module a groove is provided in the main module part and a ridge is provided in the upper cover between at least some of the eye parts on the upper cover, such than when the upper cover is fitted on the main module part the ridge will engage(click into) the groove and retain the upper cover in a releasable fix with the main module part.

By providing a groove in one part and a ridge in the other part it is possible to click the main module part together with the upper part such that even before the endless conveyor belt is assembled, each modular conveyor belt module is assembled in itself such that no loose balls or rollers may become loose or lost prior to the final assembling.

In a still further advantageous embodiment, the main module part has an upper surface between the lateral sides and the eye parts in the forwards and rearwards direction, where adjacent the circumference of the cavity, pairs of knobs extend from the upper surface, and where the upper cover has an underside in use facing the upper surface of the main module part, and where indentations in the underside are provided superposed the knobs extending from the upper surface of the main module part such that when the upper cover is fitted onto the main module part, the knobs will be at least partly accommodated in the indentations. Initially the knobs will be accommodated in a corresponding indentation in the upper cover, and it is a mounting guide that the upper cover is in a correct position with respect to the main module part. This guidance by the knobs and the indentations will improve the assembly process in that in this manner it is sure that the eye parts above the main module part and the upper cover are aligned correctly before insertion of the connection pin.

In a further embodiment a roller is arranged on an axle which may be fitted in one or more cavities provided in the main modular part, where the axle is the axis of rotation for the roller, and the axle extends beyond the roller in both ends of the roller, where each end of the axle may be inserted and retained between the knobs of a pair of knobs, said pair of knobs arranged on opposite sides of the cavity, allowing the roller to freely rotate about the axle.

In this manner the knobs serve a dual purpose in that in addition to guiding the upper cover into its correct position relative to the main module part, it also guides and retains the axle of the rollers correctly such that the rollers can freely rotate in the cavities provided in the main module part. Furthermore, by arranging the knobs in pairs on either side of the aperture, on the circumference of the aperture and in orthogonal sets the rollers may be oriented with the axle as desired and kept from the position by being held by the pair of knobs suitably accommodated in the upper part.

The axle of the rollers is press fitted between the knobs and the pair of knobs such that the distance between the knobs is slightly less than the diameter of the axle whereby the axle is firmly held by the upper surface of the main module part.

In a further advantageous embodiment of the invention each cavity is in the shape of a part of a sphere, suitable to accommodate a ball, such that part of the ball extends above the upper cover when the upper cover is fitted on the main module part, and where the ball may freely rotate in the cavity.

Naturally the sphere-shaped cavity shall have a diameter slightly larger than the ball which is intended to be accommodated in the sphere shaped cavity such that the ball may rotate freely.

In a still further advantageous embodiment of the invention the main module part and the upper cover are injection molded from a plastic material, and where the balls and rollers are injection moulded from the same or a different plastic material, optionally a reinforced plastic material and the axles of the rollers is made from steel.

Particularly, by being able to select the materials for the different parts of the modular conveyor belt module, provides the possibility to select material properties suitable for the particular purpose. For example, the main module part may be designated to be exposed to larger forces than the upper cover and therefore the main module part should be made from a stronger material or as the upper cover from which the balls or rollers extend may be designed not to carry any load apart from the load from objects carried on the conveyor belt which is mainly to be carried by the rollers and balls - and therefore the main module the material of the upper cover may be selected to be moulded from a less strong material and thereby from a cheaper material. Likewise, the balls and rollers, which are to carry the main load on the conveyor belt, may be made from stronger materials and preferably the axles of the rollers is made from steel. This leads to a further embodiment where the main modular part constitutes 60 vol-% to 95 vol-% of the entire modular conveyor belt module ex rollers and/or balls, and the upper cover the remaining volume.

It is clear with this distribution of volume percentages that the main module part will require the main part of the material used for each modular conveyor module and as such there may be some advantages in selecting an appropriate material, for example a cheaper material or a stronger material for this part only and depending on the intended use. The materials from which the modules are manufactured may also be provided with various properties such that for example materials with higher tension properties or wear properties and/or different electrically conductive properties may be selected. Particularly, the different electrical conductive properties may be advantageous and may be desirable for example on the upper cover part which may come into contact with personnel working on or along the modular conveyor belt and being able to only provide electrical conductive properties which inherently requires a much more expensive injection moulding material than regular injection moulding materials. In this manner by being able to select various materials for various parts designed for pecific purposes it is possible to obtain cost savings without compromising the technical characteristics of the modular belt module.

In embodiments where the main module part is designed to carry the main part of the load it may also be advantageous to provide more eye parts in the main module part such that the load is distributed on more eye parts and thereby more evenly distributed along the connection pin than if both the upper cover and the main module part had an equal number of eye parts.

The invention is also directed to an endless modular conveyor belt assembled from the plurality of modular conveyor belt modules as discussed above.

### Description of the Drawing

The invention will now be explained with reference to the accompanying drawing.
In fig. 1 illustrated an exploded view of a modular conveyor belt module according to the invention.
In fig. 2 is illustrated the underside of the upper cover 10.
An assembled module is illustrated in fig. 3, where the upper cover 10 is superposed an engaged with the main module 20.
In fig. 4 is illustrated a modular belt module according to the invention where the upper cover is superposed and fitted to the main module part 20, and rollers are arranged in the cavities projecting through the apertures in the upper cover 10.
In fig. 6, a further detail of the invention is illustrated.
Illustrated in fig. 7, is an eye part 12,14 of the upper cover clicked onto the main module 20, which is provided with a ridge 44.
In fig. 8 is illustrated a detail where an axle 50 of the rollers 28 is accommodated between a pair of knobs 30, arranged in the main module part.

### Detailed Description of the Invention

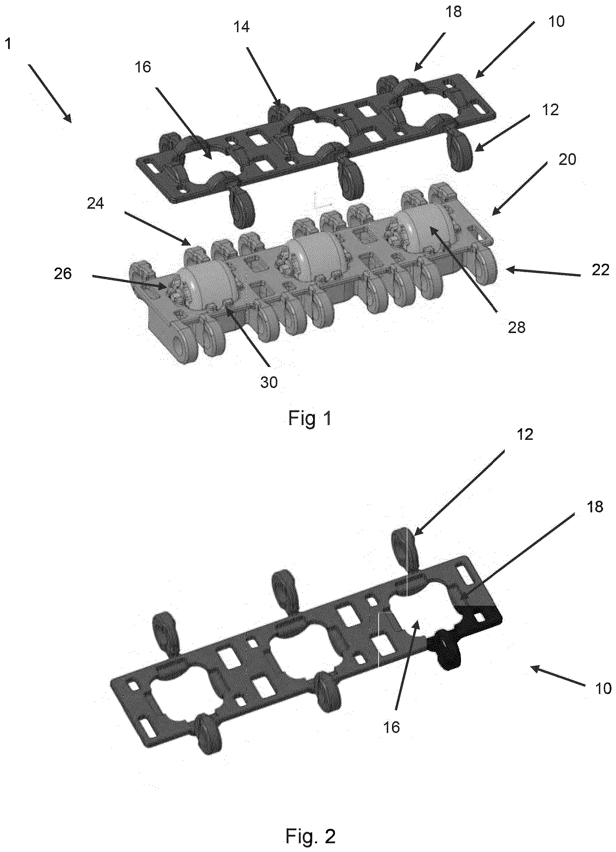

In fig. 1 illustrated an exploded view of a modular conveyor belt module according to the invention.

The modular conveyor belt module 1, comprises an upper cover 10, as well as a main module part 20.

The upper cover part 10 is provided with eye parts, 12,14 along both forward and rearward edges, in the attended traveling direction of an assembled endless conveyor belt. Furthermore, the upper cover part 10 is provided with apertures 16. In certain places along the circumference of the aperture 16 are arranged bulges 18, which bulges are providing a downward facing cavity in order to accommodate knobs as will be described further below.

The main module part 20 is also provided with eye parts 22,24 along forward and rearward edges as seen in the intended travelling direction of an assembled endless conveyor belt. Furthermore, the main module part 20, is also provided with cavities 26, wherein this embodiment rollers 28 are arranged in the cavities. Along the circumference of the cavities 26 are arranged a plurality of knobs 30.

As may be seen, the eye parts 12,14 of the upper cover 10, are arranged with a certain distance, such that when the upper cover 10 is superposed the main module part 20, the eye part 12,14 of the upper cover 10, will be arranged between the eye parts 20,24 on the main module part, such that the assembled modular belt module will have evenly spaced eye parts along the leading and trailing edges as explained above.

In fig. 2 is illustrated the underside of the upper cover 10. As is evident, the cavities under the bulges 18 are arranged around aperture 16, such that when the upper cover 10 is superposed the main module part 20, the knobs 30 will be accommodated in the cavities under the bulges 18.

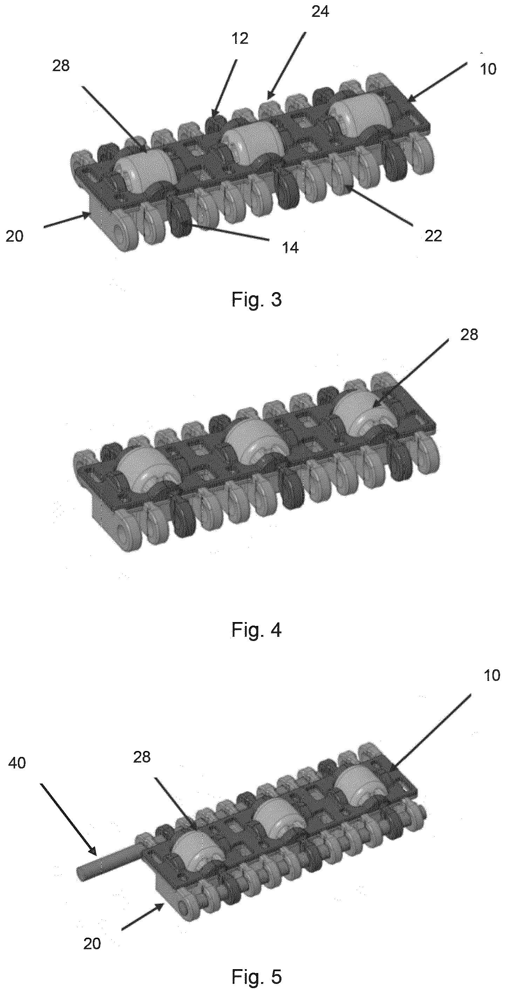

An assembled module is illustrated in fig. 3, where the upper cover 10 is superposed and engaged with the main module 20, whereby eye parts 12,14 from the upper cover 10, are inserted in the row of eye parts, 22, 24 on the main module, thereby constituting a modular belt module comprising evenly spaced eye parts on both trailing and leading edges.

As may be seen, the upper cover 10 allows the rollers to protrude through the apertures in the upper cover such that any goods or objects transported on the conveyor, may be carried by the rollers as is known in the art.

With reference to fig. 4, it may be seen that the rollers have been turned 90 degrees in order for the rollers to be able to transport any loads on the conveyor belt in the lateral direction with respect to the intended travelling direction of the endless conveyor belt as such. In this connection it should also be mentioned that instead of rollers 28, the apertures and cavities in the upper cover 10 and the main module part 20, may be shaped to accommodate balls, which is also known in the art.

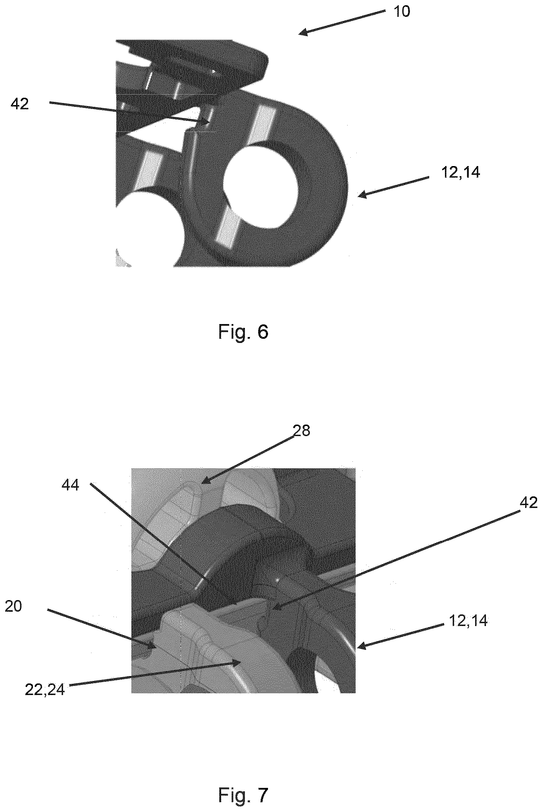

In fig. 4 is illustrated a modular belt module according to the invention where the upper cover is superposed and fitted to the main module part 20, and rollers are arranged in the cavities projecting through the apertures in the upper cover 10. Furthermore, a connection pin 40 is inserted through apertures in the eye parts in order to hingely connect the modular belt module with an adjacent similar modular belt module. This hingely connection by using eye parts and connection pins is already known in the art. The connection pin in the invention furthermore assures that the eye parts 12,14 of the upper cover 10, are fixed relative to the eye parts 22,24 of the main module part. Turning to fig. 6, a further detail of the invention is illustrated. An eye part 12,14 of the upper cover is provided with a groove 42 in the eye part, such that when the upper cover 10 is fitted on the main module part, the groove 42 will engage a corresponding ridge on the main module part, thereby clicking the upper cover onto the main module part 20. This is illustrated in fig. 7, where an eye part 12,14 of the upper cover is clicked onto the main module 20, which is provided with a ridge 44. The ridge 44 is designed with a cross section such that it will fit into the groove 42, provided in the eye part 12,14 of the upper cover 10. In this manner the upper cover 10 will click onto the main module part 20, facilitating easy assembly of the modular belt module into an endless conveyor belt.

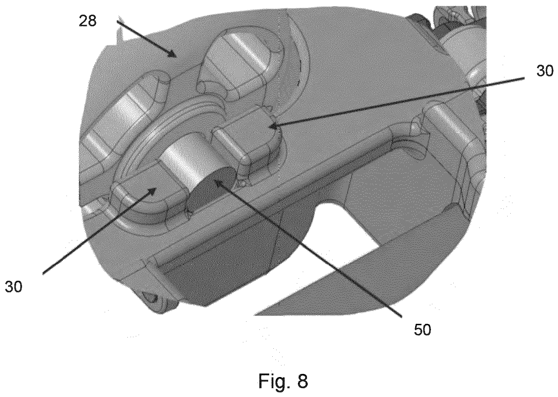

In fig. 8 is illustrated a detail where an axle 50 of the rollers 28 is accommodated between a pair of knobs 30, arranged in the main module part. By selecting the distance between the two knobs 30, such that the diameter of the axle 50 may be squeezed in between the two knobs, the roller 28 with the axle 50 is firmly fitted inside the cavity in the main module part.

## Claims

1. Modular conveyor belt module incorporating balls or rollers in the belt module, where said module is adapted for installation in a modular conveyor belt, where the conveyor belt is of the type assembled from a plurality of substantially identical modular belt links where one or more modular belt links forms lateral rows, where each modular belt link has a main body extending in the modular belt link's width direction, and where a plurality of eye parts extend forwards and rearwards from said main body, said eye parts being spaced in the width direction of the modular belt link creating an opening between adjacent eye parts, such that when two modular conveyor belt links are pushed together, the eye parts on one link will inter-fit between eye parts on the other modular belt link, and where lateral apertures in all eye parts are provided, such that when the eye parts of modular belt links in one row are overlapping eye parts in an adjacent row a through-going aperture is formed from side to side of the conveyor belt, and by inserting a connection pin through said lateral through-going aperture, adjacent modular belt links will be hingely connected, **characterized in that** the belt module comprises an upper cover and a lower main module part where the upper cover is adapted to be arranged above and fitted onto the main module part, where a first plurality of eye parts are arranged both on the main module part and on the upper cover, such that when the upper cover is positioned on the main module part eye parts will be arranged evenly spaced along the modular conveyor modules width direction, and where one or more cavities is/are arranged in the main module part, and one or more apertures is/are provided in the upper cover such that a ball, roller or other item may be placed in the cavity between the main module part and the upper cover and at least a part of said roller, ball or other item projects above the upper cover through the one or more apertures.

2. Modular conveyor belt module according to claim 1 where between at least some of the eye parts in the width direction on both sides of the main module a groove is provided in the main module part and a ridge is provided in the upper cover between at least some of the eye parts on the upper cover, such than when the upper cover is fitted on the main module part the ridge will engage(click into) the groove and retain the upper cover in a releasable fix with the main module part.

3. Modular conveyor belt module according to claim 1 where one or more eye parts both on the main module part and the upper cover has half the width of other eye parts and when the upper cover is fitted over the main module the half width eye parts on the upper cover and the main module part are arranged adjacent to each other making up a full width eye part.

4. Modular conveyor belt module according to claim 1 where between the eye parts in the width direction a ridge is provided in the main module part and a groove is provided in the upper cover, such than when the upper cover is fitted on the main module part the ridge will engage the groove and retain the upper cover in a releasable fix with the main module part.

5. Modular conveyor belt module according to claim 1, wherein the main module part has an upper surface between the lateral sides and the eye parts in the forwards and rearwards direction, where adjacent the circumference of the cavity pairs of knobs extend from the upper surface, and where the upper cover has an underside in use facing the upper surface of the main module part, and where indentations in the underside are provided superposed the knobs extending from the upper surface of the main module part such that when the upper cover is fitted onto the main module part, the knobs will be at least partly accommodated in the indentations.

6. Modular conveyor belt module according to claim 1 wherein the upper cover is provided with one or more eye lugs, and where on the main module part positioned adjacent the eye lugs is provided a bore where a pin may be inserted through the eye lug in the upper cover and into the bore thereby fastening the main module part to the upper cover.

7. Modular conveyor belt module according to claim 4, where a roller arranged on an axle may be fitted in one or more of the cavities provided in the main modular part, where the axle is the axis of rotation for the roller, and the axle extends beyond the roller in both ends of the roller, where each end of the axle may be inserted and retained between the knobs of a pair of knobs, said pair of knobs arranged on opposite sides of the cavity, allowing the roller to freely rotate about the axle.

8. Modular conveyor belt module according to claim 5 wherein the axle is press-fitted between the knobs in a pair of knobs.

9. Modular conveyor belt module according to claim 1 wherein each cavity is in the shape of a part of a sphere, suitable to accommodate a ball, such that part of the ball extends above the upper cover when the upper cover is fitted on the main module part, and where the ball may freely rotate in the cavity.

10. Modular conveyor belt module according to claim 1 wherein the main module part and the upper cover are injection molded from a plastic material, and where the balls and rollers are injection moulded from the same or a different plastic material, optionally a reinforced plastic material and the axles of the rollers is made from steel.

11. Modular conveyor belt module according to claim 1 wherein the main module part constitutes 60 vol-% to 95 vol-% of the entire modular conveyor belt module ex rollers and/or balls, and the upper cover the remaining volume.

12. Modular conveyor belt module according to claim 1 wherein the main module part is made from a different material than the upper cover, and optionally where the main module part is made from a material with higher tension properties than the upper cover and/or where the materials of the main module part and the upper cover has different wear properties and/or different electrical conductive properties.

13. Modular conveyor belt module according to claim 1 wherein the upper cover has fewer eye parts than the main module part, for example the upper cover has between 40% and 85% less eye parts than the main module part adjusted to a full eye part.

14. Endless modular conveyor belt assembled from a plurality of modular conveyor belt module incorporating balls or rollers in the belt module, where said module is adapted for installation in a modular conveyor belt, where the conveyor belt is of the type assembled from a plurality of substantially identical modular belt links where one or more modular belt links forms lateral rows, where each modular belt link has a main body extending in the modular belt link's width direction, and where a plurality of eye parts extend forwards and rearwards from said main body, said eye parts being spaced in the width direction of the modular belt link creating an opening between adjacent eye parts, such that when two modular conveyor belt links are pushed together, the eye parts on one link will inter-fit between eye parts on the other modular belt link, and where lateral apertures in all eye parts are provided, such that when the eye parts of modular belt links in one row are overlapping eye parts in an adjacent row a through-going aperture is formed from side to side of the conveyor belt, and by inserting a connection pin through said lateral through-going aperture, adjacent modular belt links will be hingely connected, **characterized in that** the belt module comprises an upper cover and a lower main module part where the upper cover is adapted to be arranged above and fitted onto the main module part, where a first plurality of eye parts are arranged both on the main module part and on the upper cover, such that when the upper cover is positioned on the main module part eye parts will be arranged evenly spaced along the modular conveyor modules width direction, and where one or more cavities is/are arranged in the main module part, and one or more apertures is/are provided in the upper cover such that a ball, roller or other item may be placed in the cavity between the main module part and the upper cover and at least a part of said roller, ball or other item projects above the upper cover through the one or more apertures, where the eye parts of adjacent modular belt modules is interleafed and a connection pin is inserted laterally through overlapping apertures in the eye parts thereby hingely connecting adjacent eye parts, and where the connection pin, is inserted through apertures in eye parts of the main module part and eye parts of the upper cover.
